# EUROPÄISCHE PATENTSCHRIFT

(11) **EP 2 683 578 B1**
(45) Veröffentlichungstag und Bekanntmachung des Hinweises auf die Patenterteilung: **03.12.2014**
(21) Anmeldenummer: 12713586.1
(22) Anmeldetag: 09.03.2012
(51) Int. Cl.: B60R 25/02

(54) **ELEKTRISCH UNTERSTÜTZTE SERVOLENKUNG MIT WEGFAHRSPERRE**
ELECTRICALLY SUPPORTED POWER STEERING HAVING AN IMMOBILIZER
SERVODIRECTION À ASSISTANCE ÉLECTRIQUE, DOTÉE D'UN DISPOSITIF ANTIDÉMARRAGE

(30) Priorität: 11.03.2011 DE 102011013714; 14.03.2011 DE 102011013957
(43) Veröffentlichungstag der Anmeldung: 15.01.2014
(73) Patentinhaber: ThyssenKrupp Presta AG, 9492 Eschen (LI)
(72) Erfinder: SANDHOLZER, Julian, A-6844 Altach (AT); OERTLE, Max, FL-9493 Mauren (LI)
(74) Vertreter: Lenzing Gerber Stute
(86) Internationale Anmeldenummer: PCT/EP2012/001063
(87) Internationale Veröffentlichungsnummer: WO 2012/123091

(56) Entgegenhaltungen:
- EP-A1- 1 568 554
- EP-A2- 1 329 368
- DE-U1- 20 103 203
- US-A- 5 921 355
- US-A1- 2006 226 942

## Beschreibung

Die vorliegende Erfindung betrifft ein Lenksystem mit einer ununterbrechbaren mechanischen Zwangskopplung zwischen einem Lenkrad und einem Lenkritzel in Form einer Lenkwelle und mit einer Hilfswelle, die über ein Untersetzungsgetriebe mit der Lenkwelle (2) drehfest gekoppelt ist. Derartige Lenksysteme sind insbesondere als Lenksysteme mit einer elektrischen Hilfskraftunterstützung, bei der ein Elektromotor über ein Untersetzungsgetriebe seine Unterstützungskraft in ein Lenkgetriebe einleitet bekannt. Insbesondere kann das Untersetzungsgetriebe als Schneckenradgetriebe ausgebildet sein. Derartige Schneckenradgetriebe sind vorzugsweise im Lenkstrang zwischen dem Steuerrad und dem Eingriff des Lenkritzels in die Zahnstange angeordnet. Lenkungen mit diesem Aufbau werden "column power assisted steering systems" oder COLPAS genannt.

Eine generelle Anforderung an derartige Lenksysteme, mit und ohne Hilfskraftunterstützung, besteht darin, eine Wegfahrsperre bereitzustellen, die eine Verriegelung der Drehung der Lenkspindel bis zu einem vorgebbaren Drehmoment sicherstellt. Im Stand der Technik gibt es hierfür eine Reihe von Lösungen.

Die EP 1568554 B1, die den Oberbegriff des Anspruchs 1 bildet, zeigt eine Lösung für eine Verriegelung, bei der ein Raststern eingesetzt wird, der mit der Manteleinheit durch einen Raststift verriegelt werden kann und der bei Überschreiten eines vorgegebenen Drehmomentes auf der Lenkspindel durchrutscht. Auf diese Weise ist sichergestellt, dass einerseits die Lenkspindel im Falle eines Diebstahls nicht durch zu hohe Drehmomente beschädigt werden kann und dass andererseits ein Verdrehen der Lenkspindel nur unter Aufwendung eines entsprechend hohen vorgegebenen Drehmomentes möglich ist. Damit kann das kontrollierte Steuern des Fahrzeuges verhindert werden und die Aufgabe der Wegfahrsperre wird erfüllt.

Nachteil dieser Lösung ist jedoch, dass die Bremskraft für relativ hohe Drehmomente im Bereich von etwa 100 Nm bis 300 Nm ausgelegt sein muss. Entsprechend robust und aufwändig muss das Verriegelungssystem aus Verriegelungsstift und Raststern aufgebaut sein.

Aus dem Dokument US2006/0226942 A1 ist eine Lenkung mit einer unmittelbar an der Lenkwelle angeordneten schaltbaren Magnetbremse bekannt, die als Lenkschloss wirkt. Bei dieser Anordnung muss die Magnetbremse ebenfalls für ein hohes Drehmoment ausgelegt sein, was ein hohes Gewicht bedingt.

In der DE 60306694 T2 wird deshalb vorgeschlagen, die Verriegelungsvorrichtung, die mit einem elektromagnetischen Aktuator betätigt wird, an einem Eingriffabschnitt angreifen zu lassen, der an der Welle des Servomotors oder einer mit dieser Welle drehfest verbunden Welle angeordnet ist. Ein mechanischer Überlastschutz ist dieser Anmeldung nicht zu entnehmen, so dass im Missbrauchsfall die Lenkspindel sehr hohen Drehmomenten ausgesetzt sein kann.

Aufgabe der Erfindung ist es daher, eine Wegfahrsperre bereitzustellen, die möglichst einfach und kompakt im Aufbau ist und dennoch die oben beschriebenen Anforderungen erfüllt.

Diese Aufgabe wird von einer Lenkung mit den Merkmalen des Anspruchs 1 gelöst.

Ausgehend von einem Lenksystem mit einer ununterbrechbaren mechanischen Zwangskopplung zwischen einem Lenkrad und einem Lenkritzel in Form einer Lenkwelle und mit einer Hilfswelle , die über ein Untersetzungsgetriebe mit der Lenkwelle drehfest gekoppelt ist, wird die Aufgabe dadurch gelöst, dass eine schaltbare Magnetbremse vorgesehen ist, die in einem geschlossenen Schaltzustand die Hilfswelle reibschlüssig gegenüber einer karosseriefesten Halterung blockiert und die in einem offenen Schaltzustand die Hilfswelle frei gibt, so dass diese in einem festen Übersetzungsverhältnis mit der Lenkwelle drehbar ist.

Die Erfindung ist insbesondere anwendbar für Lenksysteme, bei denen die Hilfswelle durch eine Motorwelle eines Servomotors einer elektrischen Hilfskraftunterstützung gebildet ist oder mit einer Motorwelle eines Servomotors einer elektrischen Hilfskraftunterstützung drehfest gekoppelt ist, die über das Untersetzungsgetriebe ein Unterstützungsmoment in das Lenksystem einleitet. Dabei wird mit Vorteil die karosseriefeste Halterung durch ein karosseriefest angeordnetes Motorgehäuse des Servomotors der elektrischen Hilfskraftunterstützung gebildet. Die drehfeste Kopplung ist dabei wiederum so zu verstehen, dass die Drehzahlen der beiden drehfest gekoppelten Wellen nicht gleich sein müssen.

Die Magnetbremse ist in verschiedenen Ausführungen einsetzbar, die weiter unten beschrieben werden. Die Ausführungen umfassen Bauelemente, die als Ankerplatten oder Ankerscheiben bezeichnet werden. Als Oberbegriff für die verschiedenen Ausführungen wird nachfolgend die Bezeichnung Anker gewählt. Die Bremse hat ausschließlich die Funktion einer Wegfahrsperre und nicht die Funktion einer Sicherheitsbremse im Falle einer Fehlfunktion des Elektromotors. Sie kann von der Steuerung derart angesteuert werden, dass ein Umschalten der Bremse in den geschlossenen Zustand nur bei Stillstand des Fahrzeugs und bei stehender Antriebsmaschine möglich ist. Die Halterung ist karosseriefest und bei einer Blockierung der Hilfswelle durch die Getriebekonstruktion des Getriebes, das nicht näher dargestellt ist, ist die Lenkspindel in ihrer Verdrehung ebenfalls blockiert.

Das Erreichen des nötigen Blockiermomentes der Bremse erfolgt, indem über eine magnetische Kraft ein Reibschluss zwischen dem Anker und dem Joch erzielt wird. Dabei ist der Anker selbst federnd als Bremsscheibe ausgebildet, so dass keine separate Feder zum Abheben der Bremsscheibe erforderlich ist.

Zur Erzielung genauer definierter Reibwerte zwischen dem Anker und dem Joch kann ein Reibbelag oder eine die Haftreibung erhöhende Beschichtung vorgesehen sein.

Vorzugsweise ist das Untersetzungsgetriebe als Schneckengetriebe ausgeführt.

Das Getriebe kann ein koaxiales Getriebe sein, das eine besonders kompakte Bauweise erlaubt.

Im Falle des Lenksystems mit elektrischer Hilfskraftunterstützung treibt dann der Elektromotor mit seiner Ausgangswelle, die die Lenkspindel umschließt, das Getriebe entsprechend an, um die Servounterstützung bereitzustellen. Bevorzugt an dem von der Getriebeseite abgewandten Ende, ist auf der Ausgangswelle des Elektromotors die Bremse befestigt. Da das Getriebegehäuse und die Bremse karosseriefest angeordnet sind, sind die Motorwelle und die Lenkspindelwelle drehbar gegenüber der Bremse und dem Gehäuse gelagert.

Gegen externe Magnetfelder kann die Magnetbremse durch eine geeignete Kapselung abgeschirmt sein, so dass eine Lösung der Magnetbremse weder unbeabsichtigt durch Störeinfluss noch missbräuchlich durch Manipulation mittels externer Felder möglich ist.

Wahlweise ist zusätzlich im Anker oder im Magnetjoch ein Permanentmagnet vorgesehen, der zu jedem Zeitpunkt ein Magnetfeld erzeugt.

Die Magnetkraft des Permanentmagneten ist dabei so ausgelegt, dass diese unzureichend ist, um eine Axialbewegung zwischen Anker und Joch zu bewirken und den Luftspalt zu schließen und somit die Bremse in den geschlossenen Zustand zu überführen. Bei geschlossener Bremse wird das Bremsmoment somit durch die zusätzliche Magnetkraft des Dauermagneten jedoch vorteilhaft erhöht.

Durch entsprechende Auslegung von Anker und Joch bzw. von Gehäuseteilen und Welle für optimalen magnetischen Fluss kann eine größere Anziehungskraft zwischen Anker und Joch erzeugt werden.

Nachfolgend werden Ausführungsbeispiele der vorliegenden Erfindung anhand der Zeichnung näher beschrieben. Es zeigen:
- Figur 1:: Ein elektromechanisches Lenksystem in einer schematischen perspektivischen Darstellung;
- Figur 2:: Einen Längsschnitt durch einen Servoantrieb für das Lenksystem nach Figur 1 in einer schematischen Darstellung;
- Figur 3:: Einen Längsschnitt ähnlich Figur 2 mit einer anderen Wegfahrsperre in verriegelter Position;
- Figur 4:: Das Detail IV aus Figur 3 in einer vergrößerten Darstellung in geöffneter Position;
- Figur 5:: Einen Längsschnitt durch einen Servoantrieb mit einer weiteren Ausführung der Wegfahrsperre;
- Figur 6:: Das Detail V aus Figur 5 in einer ersten Schaltstellung;
- Figur 7:: Das Detail V aus Figur 5 in einer zweiten Schaltstellung;
- Figur 8:: Eine Bremsscheibe in einer perspektivischen Darstellung;
- Figur 9:: Die Bremsscheibe aus Figur 8 von der Rückseite gesehen; sowie
- Figur 10:: eine Bremsscheibe entsprechend Figur 8 und Figur 9 mit einem elastisch verformbaren Bereich.

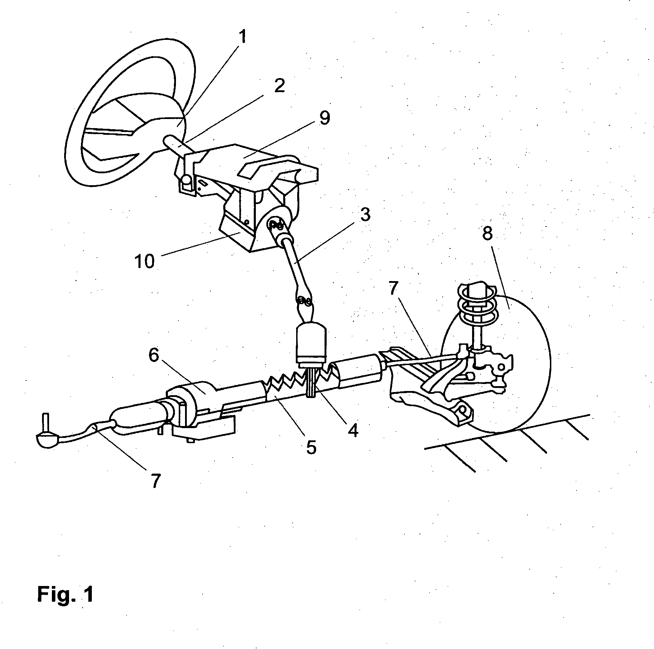

Die Figur 1 zeigt ein Lenksystem für ein Kraftfahrzeug mit einem Lenkrad 1, das drehfest mit einer oberen Lenkwelle 2 verbunden ist. Die obere Lenkwelle 2 ist über ein Kardangelenk oder eine ähnliche drehfeste Verbindung mit einer unteren Lenkwelle 3 verbunden, die schließlich mit einem Lenkritzel 4 in Verbindung steht. Eine Drehung des Lenkrades 1 bewirkt folglich eine gleichsinnige und gleichschnelle Drehung des Ritzels 4.

Das Ritzel 4 kämmt in bekannter Weise mit einer Zahnstange 5, die in einem Lenkungsgehäuse 6 verschieblich gelagert ist. Die Zahnstange 5 ist an ihren freien Enden mit Spurstangen 7 verbunden, die bei einer Axialbewegung der Zahnstange 5 in dem Lenkungsgehäuse 6 letztlich lenkbare Räder 8 des Kraftfahrzeugs verschwenken.

Die obere Lenkwelle 2 ist in einer Konsole 9 in bekannter Weise axial und radial verstellbar gelagert. Die Konsole 9 ist karosseriefest und trägt außerdem ein Gehäuse 10 mit einem unmittelbar auf die obere Lenkwelle 2 wirkenden Servoantrieb. Der Servoantrieb dient zur Reduzierung des am Lenkrad 1 auszubringenden Drehmoments, das zur Verschwenkung der Räder 8 erforderlich ist. Es handelt sich bei dem erfindungsgemäßen Lenksystem nicht um eine sogenannte Überlagerungslenkung, bei der eine Trennung zwischen der oberen Lenkwelle 2 und dem Ritzel 4 zur Überlagerung eines zusätzlichen Lenkwinkels möglich ist. Bis auf die Kardangelenke und einen eventuellen Drehmomentsensor auf Torsionsfederbasis besteht zwischen dem Lenkrad 1 und dem Lenkrad zu 4 eine drehstarre Verbindung.

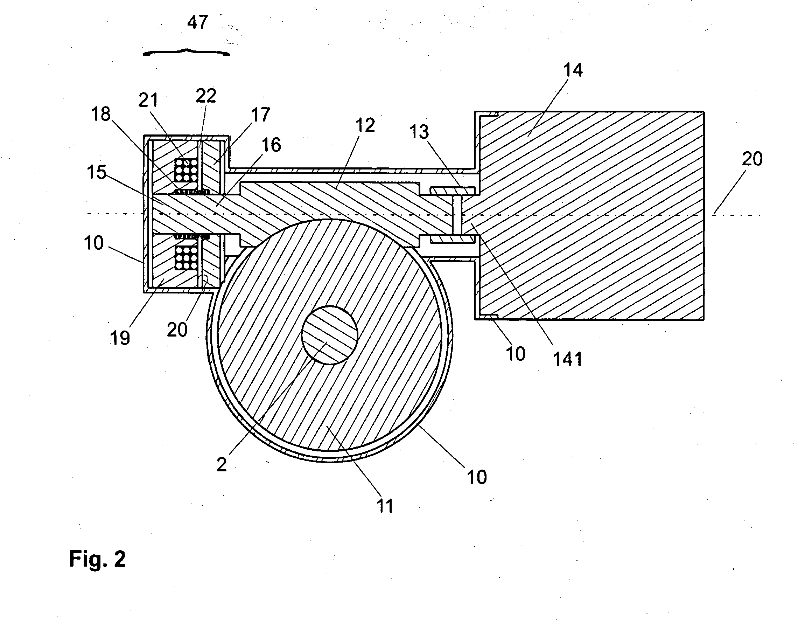

In der Figur 2 ist ein Ausführungsbeispiel eines Servoantriebs dargestellt, der in dem Gehäuse 10 aus Figur 1 angeordnet sein kann.

Die Figur 2 zeigt einen Querschnitt durch die obere Lenkwelle 2, auf der drehfest ein Schneckenrad 11 angeordnet ist. Das Schneckenrad 11 steht im Eingriff mit einer Schneckenwelle 12, die über eine, bevorzugt elastische, Verbindung 13 mit der Motorwelle 141 eines nur schematisch dargestellten Servomotors 14 drehfest gekoppelt ist. Eine Bestromung des Servomotors 14 führt folglich zu einer Drehung der Schneckenwelle 12 und, mit der entsprechenden Untersetzung, zu einer Drehung der Lenkwelle 2. Die Untersetzung, die durch die Verzahnung des Schneckenrades 11 und der Schneckenwelle 12 vorgegeben ist, wird im Rahmen der vorliegenden Erfindung ausgenutzt. An dem der Kupplung 13 gegenüber liegenden Ende der Schneckenwelle 11 ist diese mit einem Wellenstumpf 15 versehen, der in nicht dargestellter Weise in dem Gehäuse 10 gelagert ist. Das Gehäuse 10 ist an der Fahrzeugkarosserie befestigt. Es kann einteilig oder mehrteilig sein. Der Wellenstumpf 15 ist in einem der Schneckenwelle 12 benachbarten Bereich 16 unrund und trägt drehfest, aber axial verschieblich eine Ankerplatte 17, die rotationssymmetrisch kreisscheibenförmig ausgebildet ist. Die Ankerplatte 17 wird von einer Schraubenfeder 18 in Richtung des Servomotors 14 gedrängt. Das Gehäuse 19 trägt weiter ein Magnetjoch 19, dass in dem Gehäuse 10 befestigt ist. Das Magnetjoch 19 dreht sich folglich im Gegensatz zu der Ankerplatte 17 bei einer Bestromung des Elektromotors 14 nicht mit. Das Magnetjoch 19 ist ringförmig rotationssymmetrisch ausgebildet und weist in einer der Ankerplatte 17 zugewandten Stirnfläche 20 eine ringförmige Ausnehmung auf, in der eine Wicklung 21 eines Elektromagneten einliegt. Die gesamte Anordnung ist im Beispiel entsprechend der bevorzugten Ausführungsform im wesentlichen rotationssymmetrisch zu einer Achse 20 ausgebildet, die auch mit der Drehachse des Elektromotors 14 zusammen fällt.

Das Magnetjoch 19 ist in einem Querschnitt von der Achse 20 zu dem Gehäuse 10 in Radialrichtung etwa U-förmig ausgebildet, wobei zwischen den beiden freien Schenkeln des U die Wicklung 21 einliegt und das U zu der Ankerplatte 17 hin offen ist.

Die Anordnung aus Ankerplatte 17 und Magnetjoch 19 ist aus einem ummagnetisierbaren Material, insbesondere einem ferromagnetischen oder aus einem ferrimagnetischen Material mit einer hohen Koerzitivkraft gefertigt, so dass bei Magnetisierung dieser Bauteile eine hohe Remanenz verbleibt. Dabei ist es denkbar und möglich, die Ankerplatte aus verschiedenen Materialien darzustellen. Auch ist es nicht erforderlich, stets die gesamte Ankerplatte 17 und/oder das Magnetjoch aus einem ummagnetisierbaren Material herzustellen. Entscheidend ist die Ausbildung eines ausreichend starken Magnetfeldes. Durch diese Materialauswahl ist diese Baugruppe als Bremse für die Schneckenwelle 12 geeignet. Dies wird nachfolgend näher beschrieben.

In der dargestellten Stellung besteht kein Kontakt zwischen der Ankerplatte 17 und dem Magnetjoch 19. Die Schneckenwelle 12 ist an ihrem Wellenstumpf 15 frei drehbar in einem (nicht dargestellten) Lager gelagert. Eine Bestromung des Elektromotors 14 bewirkt deshalb eine Drehung der Schneckenwelle 12, die im Bereich 16 ihres unrunden Querschnitts die Ankerplatte 17 in der Drehung mitnimmt. Gleichzeitig wird über die Verzahnung auch das Schneckenrad 11 und damit die obere Lenkwelle 2 gedreht. Der Elektromotor 14 unterstützt auf diese Weise in Abhängigkeit von einer Regelung den Fahrer bei der Lenkbewegung, die durch ein in das Lenkrad 1 eingeleitetes Handmoment ausgelöst wird.

Wenn das Fahrzeug außer Betrieb gesetzt wird, muss entsprechend einer gesetzlichen Vorschrift als Wegfahrsperre unter anderem die Lenkung blockiert werden. Eine Blockierung im Sinne dieser Vorschrift liegt dann vor, wenn die Lenkwelle 2 bis zu einem festgelegten Mindestdrehmoment, je nach Vorgabe im Bereich von 100 Nm bis zu 300 Nm, nicht gedreht werden kann. Je nach Ausführung der Wegfahrsperre kann bei einem höheren Drehmoment die Wegfahrsperre mit Schlupf durchrutschen, wobei aber die Wegfahrsperre nicht aufgehoben wird, so dass eine gezielte Lenkbarkeit des Fahrzeugs nicht möglich ist.

Um eine solche Verriegelung der Lenkwelle 2 zu erreichen, wird die Wicklung 21 mit Strom beaufschlagt. Die Wicklung 21 wirkt als Elektromagnet und erzeugt in dem topfförmigen Magnetjoch 19 ein Magnetfeld, dessen Feldlinien an der Stirnseite 20 gegenüber der Ankerplatte 17 außerhalb der Wicklung 21 austreten und innerhalb der Wicklung 21, nahe der Schraubenfeder 18, wieder eintreten. Je nach Stromrichtung in der Wicklung 21 kann die Richtung der Feldlinien auch umgekehrt sein. In bekannter Weise treten die Feldlinien in die Ankerplatte 17 ein und sind bestrebt, einen Luftspalt 22 zwischen der Ankerplatte 17 und dem Magnetjoch 19 zu verkleinern. Die Ankerplatte 17 wird magnetisch gegen das Magnetjoch 19 gezogen, so dass sich der magnetische Kreis schließt. Die magnetische Anziehungskraft zwischen den Bauelementen überwindet dabei die Gegenkraft der Schraubenfeder 18.

Wenn die Ankerplatte 17 an den Magnetjoch 19 anliegt, kann der Strom durch die Wicklung 21 abgeschaltet werden. Bei geeigneter Materialwahl für das Magnetjoch 19 ist der verbleibende Restmagnetismus nach Abschalten des Stroms so groß, dass ein Permanentmagnetfeld entsteht, welches die Ankerplatte 17 dauerhaft gegen das Magnetjoch 19 zieht. Auf diese Weise entsteht eine reibschlüssige Kopplung, deren Haltemoment berechenbar ist. Aus der magnetischen Anziehungskraft zwischen der Ankerplatte 17 und dem Magnetjoch 19 abzüglich der Kraft der Schraubenfeder 18 und aus dem Reibungskoeffizienten zwischen der Ankerplatte 17 und dem Magnetjoch 19 kann die Reibkraft und bei Berücksichtigung der Durchmesser das daraus resultierende Drehmoment, das für die Verriegelung zur Verfügung steht, ermittelt werden. Das so ermittelte Drehmoment ist erforderlich, um die Schneckenwelle 12 bei anliegender Ankerplatte 17 gegen die Reibkraft zu drehen. Dieses Drehmoment kann in einem Ausführungsbeispiel 12 Nm betragen.

Mit der folgenden Beispielrechnung wird veranschaulicht, wie die Bremse ausgelegt werden kann, um bei gegebenem Untersetzungsverhältnis des Getriebes und gegebener Forderung für das zu bremsende Drehmoment an der Lenkwelle zu erfüllen. Der Wirkungsgrad der Getriebeuntersetzung wurde für die Beispielrechnung nicht berücksichtigt. Die Untersetzung zwischen dem Schneckenrad 11 und der Schneckenwelle 12 kann beispielsweise ein Verhältnis von 1 zu 20 aufweisen. Bei diesem Untersetzungsverhältnis sind 20 Umdrehungen der Schneckenwelle 12 erforderlich, um eine Umdrehung des Schneckenrades 11 und damit der Lenkwelle 2 zu bewirken. Im gleichen Verhältnis wird auch das Reibmoment an der Ankerplatte 17 auf die Lenkwelle 2 übertragen. Wenn das Reibmoment bei anliegender Ankerplatte 17 beispielsweise 12 Nm beträgt, so ist an der Lenkwelle 2 ein Drehmoment von 12 Nm x 20 = 240 Nm erforderlich, um die an dem Magnetjoch 19 anliegende Ankerplatte 17 zu drehen. Dieses Drehmoment erfüllt die Anorderung der gesetzlichen Vorschrift. Durch Dimensionierung und Materialwahl können auch andere Haltemomente verwirklicht werden.

In dem beschriebenen Schaltzustand, bei dem aufgrund der magnetischen Remanenz des Magnetjochs 19 die Ankerplatte 17 reibschlüssig an dem Magnetjoch 19 anliegt, verbraucht die Vorrichtung keine elektrische Energie, da der Strom durch die Wicklung 21 nur zur Erzeugung der Remanenz eingeschaltet werden muss und der Strom danach wieder ausgeschaltet werden kann.

Zur Lösung der Verbindung zwischen der Ankerplatte 17 und dem Magnetjoch 19 wird die Wicklung 21 so bestromt, dass das Permanentmagnetfeld in dem Magnetjoch 19 aufgehoben wird. Diese Aufhebung der Magnetisierung kann durch ein gegensinniges Feld von genau bestimmter Stärke erfolgen. Vorzugsweise wird die Magnetisierung des Magnetjochs 19 durch ein Wechselfeld aufgehoben, das durch einen Wechselstrom in der Wicklung 21 erzeugt wird und das mit der Zeit abgeschwächt wird. Hierdurch wird das Material des Magnetjochs 19 entmagnetisiert. Die Schraubenfeder 18 ist dann in der Lage, die Ankerplatte 17 von dem Magnetjoch 19 wegzudrücken. Die Ankerplatte 17 wird dann mit der Schneckenwelle 12 frei drehbar. Die Blockierung der Lenkwelle 2 ist aufgehoben.

Die Anordnung aus Magnetjoch 19, Spule 21 und Ankerplatte 17 ist in der beschriebenen Weise besonders kompakt und energiesparend auszuführen, da die erforderliche Blockierung der Lenkwelle 2 über die Untersetzung der Verzahnung zwischen dem Schneckenrad 11 und der Schneckenwelle 12 erfolgt und das erforderliche Drehmoment, welches zur Blockierung aufgebaut werden muss, entsprechend dem Untersetzungsverhältnis in der Getriebeverzahnung reduziert wird.

Die Anordnung aus Ankerplatte 17, Magnetjoch 19 und Wicklung 21 stellt konstruktiv eine schaltbare magnetische Bremse dar, die zur Verriegelung der Lenkwelle 2 einsetzbar ist.

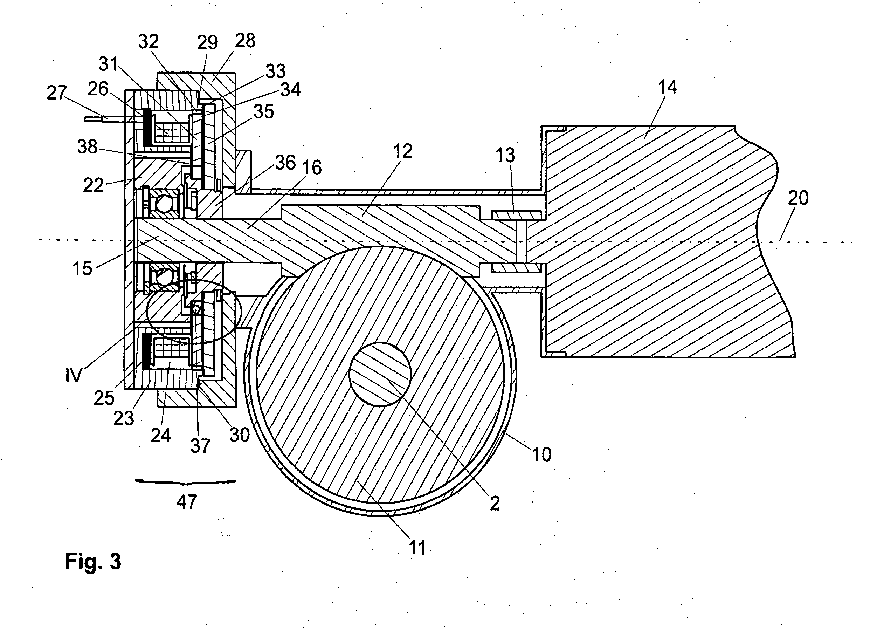

Die Figur 3 zeigt einen Servoantrieb mit einem Servomotor 14, der über eine Schneckenwelle 12 ein Schneckenrad 11 und damit die obere Lenkwelle 2 antreibt. Diese Bauelemente sind denjenigen ähnlich, die oben zu Figur 2 beschrieben wurden. Der dem Motor 14 abgewandte Wellenstumpf 16 der Schneckenwelle 12 steht bei der Ausführungsform nach Figur 3 mit einer anders aufgebahrten elektromagnetischen Bremse in Verbindung, die nachfolgend näher beschrieben wird. Die Darstellung zeigt eine verriegelte Stellung der Bremse.

Zunächst ist der Wellenstumpf 15 in einem Wälzlager 21 gegenüber einem gehäusefesten Lagersitz 22 drehbar gelagert. Der Lagersitz 22 ist umgeben von einem ringförmigen Magnetjoch 23, das im wesentlichen rotationssymmetrisch aufgebaut ist und dessen Querschnitt etwa U-förmig ausgebildet ist, wobei im Innern des Magnetjochs 23 eine in Richtung der Achse 20 auf die Schneckenwelle 12 zuweisende ringförmige Nut 24 mit rechteckigem Querschnitt vorgesehen ist. In der Nut 24 liegt ein ringförmiger Permanentmagnet 25 ein. Der Permanentmagnet 25 liegt auf dem Nutengrund, also der Schneckenwelle 12 abgewandt. Auf dem Permanentmagneten 25 ist in der Nut 24 eine Wicklung 26 angeordnet, die ebenfalls ringförmig in die Nut 24 eingelegt ist. Die Wicklung 26 ist nach Art einer Magnetspule mit elektrischen Anschlüssen 27 versehen, die dazu eingerichtet sind, einen Strom in die Wicklung 26 einzuspeisen.

Das Magnetjoch 23 sitzt mit seiner Außenseite drehfest in einem topfförmigen Gehäuseteil 28, das Teil des Gehäuses 10 ist. Der topfförmige Hauptgehäuseteil umgibt das Magnetjoch 23 an dessen Außenseite und bildet einen Ringbund 29, an dem das Magnetjoch 23 mit seiner ebenfalls ringförmigen, die Nut 24 außen umgebenden Stirnfläche 30 anliegt. Das Magnetjoch 23 ist mit nicht näher dargestellten Befestigungsmitteln, beispielsweise einem das Gehäuseteil 28 nach links abschließenden Gehäusedeckel oder einer Verschraubung oder in anderer Weise, in dem Gehäuse 10 unbeweglich festgelegt.

Die Nut 24 wird teilweise von einer Jochplatte 31 überdeckt, wobei die Jochplatte 31 auf der inneren ringförmigen Stirnfläche des Magnetjochs 23 und auf der von der offenen Seite der Nut 24 her zugänglichen Stirnseite der Wicklung 26 aufliegt und dort befestigt ist. An ihrer Außenseite begrenzt die Jochplatte 31 zusammen mit dem sie außen umgebenden Magnetjoch 23 einen Luftspalt 32. Zu diesem Zweck überragt die äußere Nutenbandung der Nut 24 des Magnetjochs 23 die innere Nutenbandung in Axialrichtung der Achse 20 um einen Betrag, der der Dicke der Jochplatte 31 entspricht. Die Nut 31 wird weiter begrenzt von zwei umlaufenden Rippen, die am äußeren Umfang der Jochplatte 31 und am inneren Umfang der Stirnseite 30 in Axialrichtung der Achse 20 so ausgebildet sind, dass sie von der Nut 24 weg weisen.

Der Wellenstumpf 15 trägt wie in Figur 2 beschrieben einen unrunden Bereich 16, der beispielsweise als Vielzahn oder als Zweiflach ausgebildet sein kann. Der unrunde Bereich 16 trägt drehfest, aber in Richtung der Achse 20 axial verschieblich eine im Wesentlichen rotationssymmetrische Ankerplatte 35, die in diesen Ausführungsbeispiel zweiteilig aus einer ringförmigen Ankerplatte und einer Nabe 36 zusammengesetzt ist. Die Ankerplatte 35 wird von einer Feder 37 in Richtung der Achse 20 von dem Lagersitz 22 und dem Magnetjoch 23 weg gedrängt. Zwischen der Jochplatte 31 und der Ankerplatte 35 ist außerdem noch ein Reitbelag 38 vorgesehen, der an einer der beiden Platten drehfest befestigt sein muss.

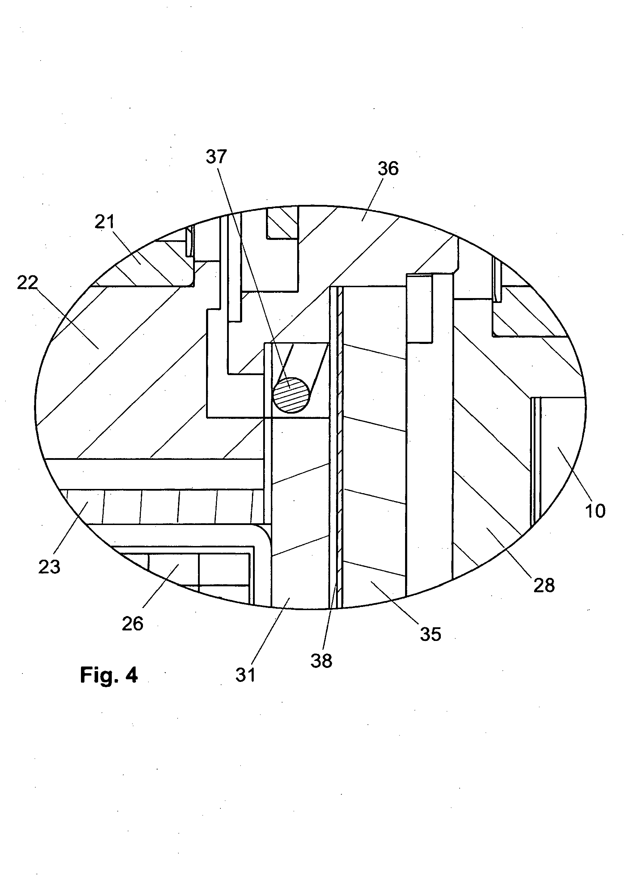

Ein in Figur 3 hervorgehobenes Detail ist mit IV bezeichnet. Dieses Detail ist in der Figur 4 in einer vergrößerten Darstellung besser erkennbar. In Figur 4 ist allerdings die gelöste oder geöffnete Stellung der Wegfahrsperre dargestellt. Dieselben Bauteile sind mit denselben Bezugsziffern versehen. Im Betrieb des Kraftfahrzeugs ist die in den Figuren 3 und 4 dargestellte Bremseinrichtung in einem Schaltzustand, in dem sich die Ankerplatte 35 in einem Abstand von der Jochplatte 31 befindet. In diesem Schaltzustand der Bremseinrichtung ist in üblicher Weise die Lenkwelle 2 in Abhängigkeit von der Betätigung des Lenkrades 1 frei drehbar. Das Schneckenrad 11 dreht sich mit der Lenkwelle 2. Durch den Eingriff in das Schneckenrad 11 dreht sich ebenfalls die Schneckenwelle 12 mit der Motorwelle des Servomotors 14 und mit der drehfest auf der Schneckenwelle 12 in dem unrunden Bereich 16 angeordneten Ankerplatte 35. Die Feder 37 stellt sicher, dass der Abstand zwischen der Ankerplatte 35 und der Jochplatte 31 aufrecht erhalten bleibt, so dass die freie Drehung der Schneckenwelle 12 nicht durch einen Kontakt im Bereich des Reibbelags 38 behindert wird.

Wenn das Kraftfahrzeug außer Betrieb gesetzt und gegen unbefugte Benutzung gesichert werden soll, wird die Wicklung 26 über die Anschlüsse 27 kurz von einer Steuerung mit Strom beaufschlagt. Das entstehende Magnetfeld bewirkt, dass die Ankerplatte 35 gegen die Kraft der Feder 37 auf die umlaufenden Rippen 33 und 34 gezogen wird, da die Anordnung bestrebt ist, den magnetischen Kreis möglichst zu schließen. Die Ankerplatte 35 liegt dann unter Zwischenschaltung des Reibbelags 38 auf der Jochplatte 31 auf. Der Permanentmagent 25 erzeugt dabei in dem Magnetjoch 31 ein Magnetfeld, welches nach Abschalten des elektrischen Stroms in der Wicklung 26 ausreichend groß ist, um die Ankerplatte 35 gegen die Wirkung der Feder 37 in dieser Position zu halten und eine definierte Anpresskraft zu entwickeln. Das Magnetfeld des Permanentmagneten 25 ist andererseits nicht groß genug, um die Ankerplatte 35 aus der in Fig. 4 dargestellten frei drehbaren Position in die in Figur 3 dargestellte anliegende Position zu ziehen. Zur Änderung des Schaltzustandes von der gelösten Stellung in die angezogene oder gebremste Stellung ist deshalb das kurzzeitige Bestromen der Wicklung 26 erforderlich. Die Stromrichtung in der Wicklung 26 soll dabei so sein, dass das Feld des Permanentmagneten 25 verstärkt wird.

In der beschriebenen und in Figur 3 dargestellten Schaltstellung ist die Bremseinrichtung also blockiert, da zwischen der Ankerplatte 35 und der Jochplatte 31 ein reibschlüssiger Eingriff herrscht. Es besteht Haftreibung bis zu einem bestimmten Grenzdrehmoment an der Schneckenwelle 12. Das Grenzdrehmoment lässt sich errechnen aus der Anpresskraft, dem Haftreibungskoeffizienten im Bereich des Reibbelags 38 und aus dem Radius der Ankerplatte 35. Wie im oben genannten Beispiel zu Figur 2 kann das von der Bremseinrichtung maximal gehaltene Drehmoment zum Beispiel 12 Nm betragen. Wenn die Übersetzung durch den Eingriff der Schneckenwelle 12 in das Schneckenrad 11 ein Verhältnis von 20:1 beträgt, so erzeugt die Bremseinrichtung an der Lenkwelle ein Haltemoment von 240 Nm. Dies ist ausreichend, um als Wegfahrsperre zu wirken. Wird das Drehmoment an der Lenkwelle 2 überschritten, so rutscht die Bremseinrichtung durch, ohne sich jedoch zu lösen. Ein kontrolliertes Lenken des Kraftfahrzeugs ist damit unmöglich. Es wird jedoch eine Drehmomentbegrenzung erreicht, die bei entsprechender Auslegung der Lenkwelle Beschädigungen der Lenkwelle durch Missbrauch ausschließt.

Wird das Kraftfahrzeug wieder in Betrieb genommen, so muss die Wegfahrsperre gelöst werden. Zu diesem Zweck wird die Wicklung 26 von einer Steuerung kurzzeitig bestromt. Der Strom fließt dabei in eine Richtung, die ein zu dem Feld des Magneten 25 gegensinniges Magnetfeld erzeugt. Dieses Magnetfeld ist nach Richtung und Stärke so bemessen, dass es die Wirkung des Permanentmagneten 25 möglichst genau aufhebt. In diesem Zustand wird die Ankerplatte 35 nicht mehr gegen die Jochplatte 31 gezogen. Die Feder 37 kann die Ankerplatte 35 von der Jochplatte 31 weg bewegen, so dass die Bremseinrichtung in den gelösten Schaltzustand hergeht. Da sich die Ankerplatte 35 von dem Luftspalt 32 weg bewegt, gelangt sie auch so weit außerhalb der Wirkung des Magnetfelds des Permanentmagneten 25, dass nach einem Abschalten des Stroms durch die Wicklung 26 der beschriebene ausgekuppelte oder gelöste Schaltzustand der Bremseinrichtung beibehalten bleibt.

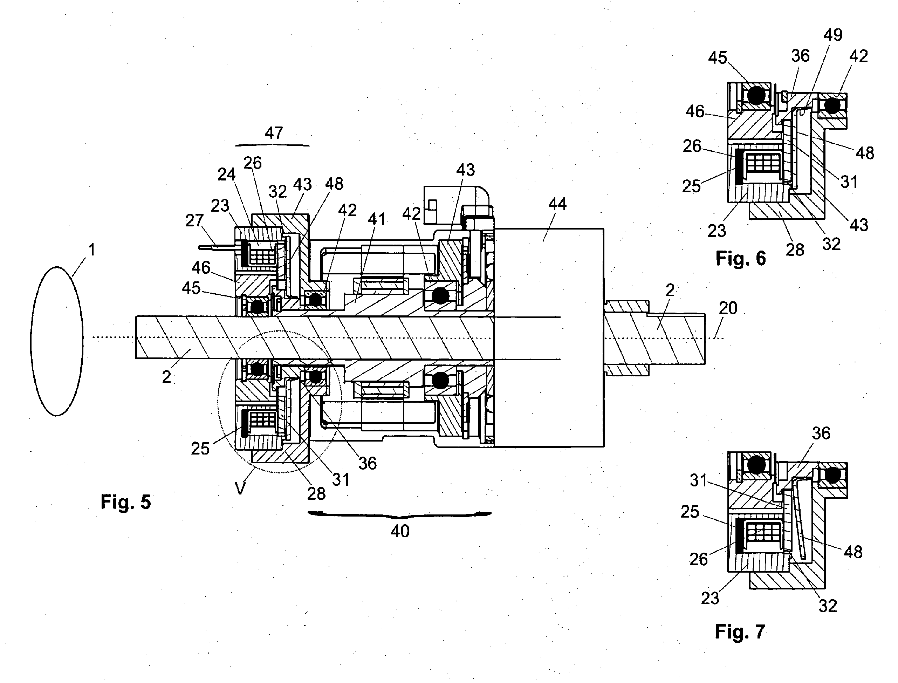

Ein weiteres Ausführungsbeispiel der Erfindung ist in Figur 5 dargestellt.

Figur 5 zeigt das Lenkrad 1, dass mit der Lenkwelle 2 in Verbindung steht. Die Lenkwelle 2 ist umgeben von einem koaxialen Servomotor 40, der nach Art eines Rohrmotors auf der Lenkwelle 2 sitzt. Eine Motorwelle 41 ist über Wälzlager 42 in einem Motorgehäuse 43 gelagert. Die Motorwelle 41 umschließt die Lenkwelle unter Bildung eines Zwischenraums und ist nur über ein Getriebe 44 drehfest mit der Lenkwelle 2 gekoppelt.

Die Motorwelle 41 treibt ein nicht näher beschriebenes Reduziergetriebe 44 an, dass die Drehung der Motorwelle 41 beispielsweise in einem Untersetzungsverhältnis von 20 zu 1 in eine entsprechende langsamere Drehung der Lenkwelle 2 übersetzt. Das Motorgehäuse 43 ist entsprechend dem Gehäuse 10 aus Figur 1 in dem Kraftfahrzeug karosseriefest angeordnet. Eine Bestromung des Elektromotors 40 in Abhängigkeit von einer Steuerung bewirkt folglich in bekannter Weise eine Servounterstützung der Lenkwelle 2 und damit des vom Fahrer an Lenkrad 1 aufzuwendenden Lenkdrehmoments.

Die Lenkwelle 2 ist in dem Getriebe 44 gelagert. Auf der anderen Seite der in Figur 5 dargestellten Anordnung ist die Lenkwelle 2 in einem Wälzlager 45 drehbar gelagert, dass seinen Sitz in einem Gehäuseteil 46 hat. Das Gehäuseteil 46 trägt ebenso wie das Gehäuse 43 eine insgesamt mit 47 bezeichnete Bremsenanordnung, die im wesentlichen baugleich mit der in den Figuren 3 und 4 dargestellten elektromagnetischen Bremse ist. Auch baugleiche Bauteile tragen dieselben Bezugsziffern. Auch hier ist da Magnetjoch 23 ringförmig ausgebildet und mit einer zu dem Elektromotor 40 hin offenen Nut 24 mit rechteckigem Querschnitt versehen. Der Permanentmagnet 25 liegt am Nutengrund ein. Die Wicklung 26 wiederum liegt ebenfalls in der Nut auf den Permanentmagneten 25. Der elektrische Anschluss 27 versorgt die Wicklung 26 in Abhängigkeit von einer Steuerung mit elektrischem Strom. Das Magnetjoch 23 sitzt in dem ringförmigen Sitz des Gehäuseteils 28 und ist dort drehfest und folglich auch mit dem Gehäuse 43 karosseriefest fixiert. Die Jochplatte 31 liegt auf der Wicklung 26 auf und bildet mit dem Magnetjoch 23 einen Luftspalt, in dem das Magnetfeld des Permanentmagneten 25, und bei Bestromung auch der Wicklung 26 einen besonders großen Wert annimmt. Die Motorwelle 41 trägt drehfest abweichend von dem Ausführungsbeispiel aus den Figuren 3 und 4 eine Ankerscheibe 48, die nachfolgend näher beschrieben wird. Hierzu wird Bezug genommen auf die Figuren 6 und 7, die das Detail V aus Figur 5 in vergrößerter Darstellung und in zwei verschiedenen Schaltstellungen zeigen.

Die nicht dargestellte Motorwelle, die in dem Wälzlager 42 gegenüber dem Gehäuse 43 drehbar gelagert ist, trägt die Nabe 36, die auf der Motorwelle in Axialrichtung fixiert und drehfest angeordnet ist. Die Nabe 36 trägt die Ankerscheibe 48 aus einem ummagnetisierbaren Material. Die Ankerscheibe 48 ist einstückig ausgebildet und weist einen kreisringförmigen, im Durchmesser den Luftspalt 32 überragenden Durchmesser auf. An ihrem inneren Umfang weist die Ankerscheibe einen in Axialrichtung der Achse 20 weisenden hülsenförmigen Abschnitt 49 auf, mit dem die Ankerscheibe 48 auf der Nabe 36 und damit auch auf der Motorwelle befestigt ist. Die Ankerscheibe 48 ist aus einem ummagnetisierbaren Material gefertigt und wird aufgrund des Magnetfelds, dass der Permanentmagnet 25 erzeugt, gegen das Magnetjoch 23 und gegen die Jochplatte 31 gezogen, so dass aufgrund der entstehenden Haftreibung die Motorwelle gegenüber dem Magnetjoch 23 und damit gegenüber dem karosseriefesten Gehäuse 43 bis zu einem gewissen Drehmoment blockiert ist.

Die in der Figur 5 dargestellte Anordnung des Getriebes 44, des Lenkrades 1, des Elektromotors 40, der Bremse 47 in Bezug auf ihre axiale Position ist nur als Beispiel zu verstehen. Andere Anordnungen sind denkbar und möglich.

Wie oben zu Figur 3 und Figur 4 beschrieben wurde, erfolgt das Schließen der Bremse in dem gezeigten reibschlüssig verriegelten Zustand durch kurzzeitiges Bestromen der Wicklung 26 in der Weise, dass das entstehende Magnetfeld gleichsinnig zu dem Magnetfeld des Permanentmagneten 25 ist, wodurch die Ankerscheibe 48 gegen das Magnetjoch 23 wird. Das Magnetfeld des Permanentmagneten 25 ist dann ausreichend, um die Ankerscheibe 48 in dieser Stellung zu halten. Das erneute Umschalten in den frei drehbaren Schaltzustand der Bremsenanordnung 47 erfolgt durch ein erneutes Bestromen der Wicklung 26 in der Weise, dass ein zu dem Magnetfeld des Permanentmagneten 25 gegensinniges Magnetfeld erzeugt wird, so dass das Magnetfeld in dem Luftspalt 32 klein wird. Die Ankerscheibe 48 federt dann in die Stellung, die in Figur 7 veranschaulicht ist. In dieser Stellung ist die Ankerscheibe 48 nach wie vor drehfest mit der Motorwelle über die Nabe 36 verbunden. Sie liegt jedoch nicht mehr auf den Magnetjoch 23 und der Jochplatte 31 auf. Die Motorwelle ist dadurch gegenüber der Bremsenanordnung 47 und gegenüber dem karosseriefesten Gehäuse 43 frei drehbar. Zur Darstellung der Wegfahrsperre ist die Auslegung derart zu wählen, dass zum Schließen der Bremse erneut ein Strom benötigt wird. Entsprechend muss der Permanentmagnet 25 nur so stark ausgelegt sein, dass sie die Ankerscheibe 28 nicht über den Luftspalt hinweg aus der ausgefederten Position in den Reibschluss ziehen kann. Entsprechend ist zum Öffnen der Wegfahrsperre nur ein kurzer Stromfluss erforderlich, der die Wirkung des Permanentmagneten 25 aufhebt. Zur Verriegelung der Wegfahrsperre muss ein Stromfluss in die Wicklung 26 eingespeist werden, der die Wirkung des Permanentmagneten 25 derart verstärkt, dass die Ankerscheibe 48 gegen die Federwirkung angezogen wird und der reibschlüssige Kontakt mit der Jochplatte 31 erreicht ist. Wird danach die Wicklung 26 wieder stromlos, so genügt das Magnetfeld des Permanentmagneten 25, die reibschlüssige Verbindung aufrecht zu erhalten.

Um diese Eigenschaft aufzuweisen, ist die Ankerscheibe 48 nach Art einer Tellerfeder ausgebildet. Die leicht konische Stellung, die in Figur 7 veranschaulicht ist, ist die entspannte Stellung oder Ruhestellung der Ankerscheibe 48. In die ebene Stellung gemäß Figur 5 und Figur 6 wird die Ankerscheibe 48 nur durch externen Kraftaufwand verformt. Entfällt diese Kraft, springt die Ankerscheibe 48 in die Stellung aus Figur 7 zurück.

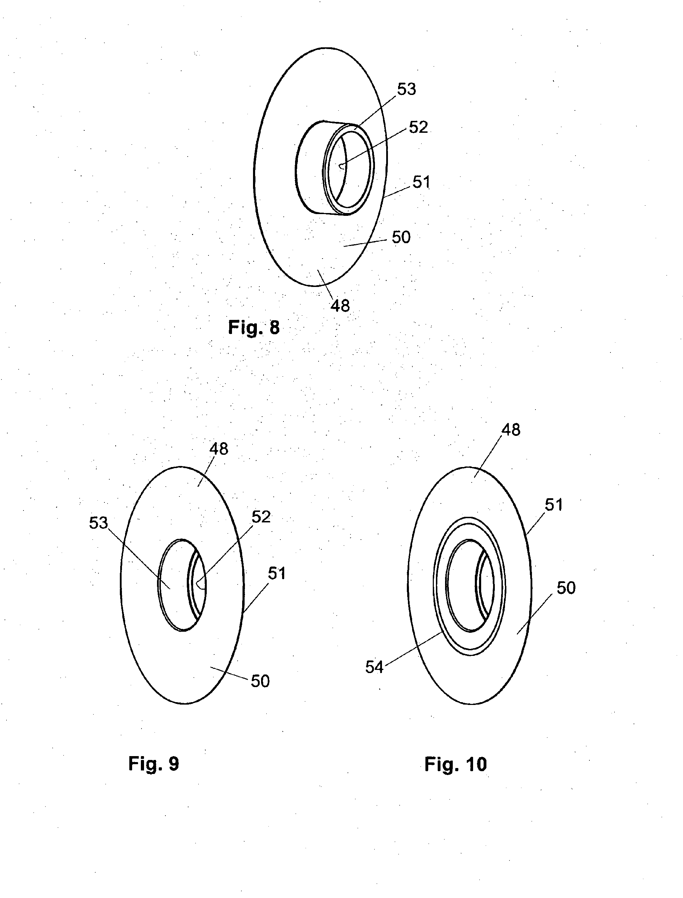

Die Figuren 8 und 9 zeigen die Ankerscheibe 48 aus den Figuren 5, 6 und 7 in einer vergrößerten perspektivischen Darstellung von zwei Seiten gesehen. Die Ankerscheibe 48 weist einen im Wesentlichen ebenen kreisringförmigen Bereich 50 auf, mit einem äußeren Rand 51 und einem inneren Rand 52. An dem inneren Rand 52 ist ein hülsenförmiger Abschnitt 53 befestigt, mit dem die Ankerscheibe 48 auf der Nabe 36 aus den Figuren 5 bis 7 befestigt ist. Der ringförmige Bereich 50 ist, wie bereits beschrieben wurde, im entspannten Zustand nach Art einer Tellerfeder leicht konisch ausgebildet. Durch Anwendung einer äußeren Kraft im Bereich des äußeren Umfangs 51 kann der Bereich 50 verformt werden, insbesondere in die exakt plane Konfiguration aus Figur 6. Entfällt diese Kraft, schnappt der Bereich 50 wieder in die leicht kegelförmige Ursprungsform zurück.

Die Figur 10 zeigt schließlich eine Ankerscheibe 48, bei der die Steifigkeit des ringförmigen Bereichs 50 durch eine in der Nähe des inneren Randes 52 angebrachte umlaufende Sicke 54 reduziert ist. Der ringförmige Bereich 50 ist wie in den anderen Ausführungsbeispielen im Ruhezustand leicht konisch ausgebildet. Durch Anwendung einer äußeren Kraft im Bereich des äußeren Randes 51 kann der Bereich 50 in eine ebene Konfiguration überführt werden, so dass bei Anwendung in der Bremsanordnung 47 die reibschlüssig verriegelte Schaltstellung gemäß Figur 5 und Figur 6 eingenommen wird. Die Sicke 54 erleichtert die Überführung der Ankerscheibe 48 in diesen ebenen Zustand. Die äußere Kraft, die dann zur Verformung des ringförmigen Bereichs 50 erforderlich ist, wird reduziert. Dennoch schnappt die Ankerscheibe 48 bei Wegfall der äußeren Kraft, wenn sich also die Magnetfelder der Wicklung 26 und des Permanentmagneten 25 beim Abschalten der Wegfahrsperre aufheben, in den konischen Zustand, in dem die Bremsanordnung 47 frei drehbar ist.

Soweit technisch möglich, können unterschiedliche Merkmale der oben beschriebenen Ausführungsbeispiele auch untereinander kombiniert und ausgetauscht werden, ohne den Bereich der Erfindung zu verlassen. Es ist offensichtlich, dass die in den Beispielen dargestellten Kombinationen aus den verschiedenen Ausführungsformen für die Bremse und den verschiedenen Ausführungsformen für die elektrische Hilfskraftunterstützung auch ausgetauscht werden können.

Als Beispiele sind bewusst Lösungen mit elektrischer Hilfskraftunterstützung ausgewählt worden, um möglichst viele Elemente der Erfindung darzustellen. Wird der Elektromotor 14 entsprechend der Ausführung gemäß den Figuren 1 bis 4 weggelassen, so bildet die drehfest mit der Motorwelle 141 gekoppelte Schneckenwelle 12 mit ihrem Wellenstumpf 15 und ihrem Bereich 16 die Hilfswelle, die mit der Lenkwelle 1 drehfest gekoppelt ist. Die drehfeste Kopplung wird über den Verzahnungseingriff zwischen Schneckenwelle 12 und Schneckenrad 11 bewirkt. Wird der Elektromotor 14 entsprechend der Ausführung gemäß der Figur 5 weggelassen, so bildet die Motorwelle 41 die Hilfswelle, die mit der Lenkwelle 1 drehfest gekoppelt ist. Hier erfolgt die drehfeste Kopplung über das Getriebe 44.

**Bezugsziffern**

| | |
|---|---|
| | 25. Permanentmagnet |
| 1. Lenkrad | 26. Wicklung |
| 2. Lenkwelle | 27. Anschlüsse |
| 3. Lenkwelle | 28. Gehäuseteil |
| 4. Lenkritzel | 29. Ringbund |
| 5. Zahnstange | 30. Stirnfläche |
| 6. Lenkungsgehäuse | 31. Jochplatte |
| 7. Spurstange | 32. Luftspalt |
| 8. Räder | 33. Rippe |
| 9. Konsole | 34. Rippe |
| 10. Gehäuse | 35. Ankerplatte |
| 11. Schneckenrad | 36. Nabe |
| 12. Schneckenwelle | 37. Feder |
| 13. Verbindung | 38. Reibbelag |
| 14. Servomotor | 40. Servomotor |
| 15. Wellenstumpf | 41. Motorwelle |
| 16. Bereich | 42. Wälzlager |
| 17. Ankerplatte | 43. Motorgehäuse |
| 18. Schraubenfeder | 44. Reduziergetriebe |
| 19. Magnetjoch | 45. Wälzlager |
| 20. Stirnfläche | 46. Gehäuseteil |
| 21. Wicklung | 47. Bremsenanordnung |
| 22. Luftspalt | 48. Ankerscheibe |
| 23. Magnetjoch | 49. Abschnitt |
| 24. Nut | 50. ringförmiger Bereich |
| | 51. äußerer Umfang |
| 54. | Sicke |
| 141. | Motorwelle |

## Patentansprüche

1. Lenksystem mit einer ununterbrechbaren mechanischen Zwangskopplung zwischen einem Lenkrad (1) und einem Lenkritzel (4) in Form einer Lenkwelle (2) und mit einer Hilfswelle, die über ein Untersetzungsgetriebe mit der Lenkwelle (2) drehfest gekoppelt ist, **dadurch gekennzeichnet, dass** eine schaltbare Magnetbremse (47) vorgesehen ist, die in einem offenen Schaltzustand die Hilfswelle frei gibt, so dass diese in einem festen Übersetzungsverhältnis mit der Lenkwelle (2) drehbar ist, und die in einem geschlossenen Schaltzustand die Hilfswelle (41) reibschlüssig gegenüber einer karosseriefesten Halterung blockiert, und dass die Magnetbremse (47) ein karosseriefestes Joch (19, 23, 31) und einen mit der Hilfswelle drehbaren Anker (17, 35, 48) aufweist, wobei mittels einer magnetischen Kraft ein Reibschluss zwischen dem Anker (17, 35, 48) und dem Joch (17, 23, 31) erzeugbar ist, und dass der Anker (17, 35, 48) selbst federnd ausgebildet ist, wobei eine Ankerscheibe in einer entspannten Stellung, die der offenen Stellung der Magnetbremse (47) entspricht, eine konische Form aufweist und die Ankerscheibe unter Einfluss der Magnetkraft in eine die geschlossene Stellung der Magnetbremse (47) bewirkende ebene Form überführbar ist.

2. Lenksystem nach Anspruch 1, **dadurch gekennzeichnet, dass** die Hilfswelle durch eine Motorwelle (41) eines Servomotors einer elektrischen Hilfskraftunterstützung gebildet ist oder mit einer Motorwelle (141) eines Servomotors einer elektrischen Hilfskraftunterstützung drehfest gekoppelt ist, die über das Untersetzungsgetriebe (11, 12, 44) ein Unterstützungsmoment in das Lenksystem einleitet.

3. Lenksystem nach einem der vorhergehenden Ansprüche,
**dadurch gekennzeichnet, dass** zwischen dem Anker (17, 35, 48) und dem Joch (19, 23, 31) ein Reibbelag (38) oder eine die Haftreibung erhöhende Beschichtung vorgesehen ist.

4. Lenksystem nach einem der vorhergehenden Ansprüche,
**dadurch gekennzeichnet, dass** das Untersetzungsgetriebe als Schneckengetriebe (11, 12) ausgeführt ist, wobei eine Schneckenwelle (12) direkt drehfest mit der Hilfswelle gekoppelt ist.

5. Lenksystem nach einem der vorhergehenden Ansprüche,
**dadurch gekennzeichnet, dass** das Untersetzungsgetriebe ein die Lenkwelle (2) koaxial umgebendes Getriebe (44) ist.

6. Lenksystem nach Anspruch einem der vorhergehenden Ansprüche, **dadurch gekennzeichnet, dass** die Motorwelle (41) eine die Lenkwelle (2) umgebende Hohlwelle ist, dass das Untersetzungsgetriebe (44) an einer Seite der Hilfswelle angeordnet ist, und dass die Magnetbremse (47) an der dem Untersetzungsgetriebe (44) gegenüber liegenden Seite der Hilfswelle angeordnet ist.

7. Lenksystem nach einem der vorhergehenden Ansprüche,
**dadurch gekennzeichnet, dass** die Magnetbremse (47) durch eine Kapselung gegen äußere Magnetfelder abgeschirmt ist.

8. Lenksystem nach einem der vorhergehenden Ansprüche,
**dadurch gekennzeichnet, dass** das Magnetjoch (19, 23, 31) und/oder der Anker (17, 35, 48) mit einem Permanentmagneten (25) versehen ist, wobei magnetische Feldstärke des Permanentmagneten (25) so eingerichtet ist, dass allein aufgrund der Feldstärke des Permanentmagneten (25) die Bremse (47) nicht in den geschlossenen Zustand überführbar ist.

## Claims

1. Steering system with an uninterruptible mechanical positive coupling between a steering wheel (1) and a steering pinion (4) in the form of a steering shaft (2) and an auxiliary shaft which is non-rotatably coupled via a reduction gear to the steering shaft (2), **characterised in that** a switchable magnetic brake (47) is provided which releases the auxiliary shaft in an open switching state so in a fixed gear ratio it can rotate with the steering shaft (2), and in a closed switching state frictionally blocks the auxiliary shaft (41) with respect to a body-mounted bracket, and **in that** the magnetic brake (47) comprises a body-mounted yoke (19, 23, 31) and an armature (17, 35, 48) that can rotate with the auxiliary shaft (47), wherein a frictional engagement between the armature (17, 35, 48) and the yoke (17, 23, 31) can be generated by means of a magnetic force, and **in that** the armature (17, 35, 48) itself is designed to be resilient, wherein in a relaxed position, corresponding to the open position of the magnetic brake (47), an armature disc has a conical shape, and under the influence of the magnetic force the armature disc can be transferred into a planar shape effecting the closed position of the magnetic brake (47).

2. Steering system according to claim 1, **characterised in that** the auxiliary shaft is formed by a motor shaft (41) of a servomotor of an electric power assistance or is non-rotatably coupled to a motor shaft (141) of a servomotor of an electric power assistance which introduces an assistance torque into the steering system via the reduction gears (11, 12, 44).

3. Steering system according to either of the preceding claims, **characterised in that** a friction lining (38) or a coating that increases static friction is provided between the armature (17, 35, 48) and the yoke (19, 23, 31).

4. Steering system according to any one of the preceding claims, **characterised in that** the reduction gear is designed as a worm gear (11, 12), wherein a worm shaft (12) is directly non-rotatably coupled to the auxiliary shaft.

5. Steering system according to one of the preceding claims, **characterised in that** the reduction gear is a gear (44) coaxially surrounding the steering shaft (2).

6. Steering system according to any one of the preceding claims, **characterised in that** the motor shaft (41) is a hollow shaft surrounding the steering shaft (2), **in that** the reduction gear (44) is arranged on one side of the auxiliary shaft, and **in that** the magnetic brake (47) is arranged on the side of the auxiliary shaft opposing the reduction gear (44).

7. Steering system according to any one of the preceding claims, **characterised in that** the magnetic brake (47) is shielded by an enclosure against external magnetic fields.

8. Steering system according to any one of the preceding claims, **characterised in that** the magnetic yoke (19, 23, 31) and/or the armature (17, 35, 48) is provided with a permanent magnet (25), wherein the magnetic field strength of the permanent magnet (25) is arranged in such a way that the brake (47) cannot be transferred into the closed state solely on the basis of the field strength of the permanent magnet (25).

## Revendications

1. Système de direction comportant un couplage forcé mécanique permanent entre un volant (1) et un pignon de direction (4) sous forme d'arbre de direction (2), et un arbre auxiliaire qui est couplé par l'intermédiaire d'un réducteur de vitesse avec l'arbre de direction (2) de sorte à être immobile en rotation, **caractérisé en ce que** l'on prévoit un frein électromagnétique (47) commutable qui libère l'arbre auxiliaire (41) dans un état de commutation ouvert de sorte à ce que l'arbre auxiliaire (41) soit susceptible de pouvoir tourner avec l'arbre de direction (2) selon un rapport de démultiplication fixe, et bloque, par friction, l'arbre auxiliaire (41) relativement à un dispositif de fixation fixé à la carrosserie dans un état de commutation fermé, et que le frein électromagnétique (47) présente une culasse (19, 23, 31) fixée à la carrosserie et une ancre (17, 35, 48) tournant avec l'arbre auxiliaire où une liaison par friction est susceptible d'être produite entre l'ancre (17, 35, 48) et la culasse (17, 23, 31) à l'aide d'une force magnétique et que l'ancre (17, 35, 48) est formée de sorte à être auto-élastique, où une plaque d'ancrage présente une forme conique dans une position relâchée, correspondant à une position ouverte du frein électromagnétique (47), et la plaque d'ancrage sous l'action de la force magnétique est susceptible d'être transférée en une forme plane provoquant la position fermée du frein électromagnétique (47).

2. Système de direction selon la revendication 1, **caractérisé en ce que** l'arbre auxiliaire est formé par un arbre moteur (41) d'un servomoteur d'une assistance d'une force auxiliaire électrique ou est couplé de sorte à être immobile en rotation avec un arbre moteur (41) d'un servomoteur d'une assistance d'une force auxiliaire électrique qui envoie par l'intermédiaire du réducteur de vitesse (11, 12, 44) un couple d'assistance dans le système de direction.

3. Système de direction selon une des revendications précédentes, **caractérisé en ce que** l'on prévoit une garniture de friction (38) ou un revêtement augmentant le frottement par adhérence entre l'ancre (17, 35, 48) et la culasse (19, 23, 31).

4. Système de direction selon une des revendications précédentes, **caractérisé en ce que** le réducteur de vitesse est développé en tant qu'engrenage à vis sans fin (11, 12) où un arbre à vis sans fin (12) est directement couplé de sorte à être immobile en rotation avec l'arbre auxiliaire.

5. Système de direction selon une des revendications précédentes, **caractérisé en ce que** le réducteur de vitesse est un engrenage (44) entourant de manière coaxiale l'arbre de direction (2).

6. Système de direction selon une des revendications précédentes, **caractérisé en ce que** l'arbre du moteur (41) est un arbre creux entourant l'arbre de direction (2), que le réducteur de vitesse (44) est agencé sur un côté de l'arbre auxiliaire, et que le frein électromagnétique (47) est agencé sur le côté de l'arbre auxiliaire étant opposé au réducteur de vitesse (44).

7. Système de direction selon une des revendications précédentes, **caractérisé en ce que** le frein électromagnétique (47) est protégé contre le champ magnétique extérieur par un enrobage.

8. Système de direction selon une des revendications précédentes, **caractérisé en ce que** la culasse magnétique (19, 23, 31) et/ou l'ancre (17, 35, 48) est muni d'un aimant permanent (25) où l'intensité du champ magnétique de l'aimant permanent (25) est aménagée de telle sorte que, du seul fait de l'intensité du champ de l'aimant permanent (25), le frein (47) n'est pas susceptible d'être transféré dans l'état fermé.
